# EUROPEAN PATENT SPECIFICATION

(11) **EP 0 684 401 B1**
(45) Date of publication and mention of the grant of the patent: **25.08.1999**
(21) Application number: 95107345.1
(22) Date of filing: 15.05.1995
(51) Int. Cl.: F16D 55/32

(54) **Sealed non-lubricated single-disk brake, particularly for axles of industrial and farming motor vehicles and the like**
Verkapselte, trockenlaufende Einscheibenbremse, insbesondere für Achsen industrieller und landwirtschaftlicher Fahrzeuge und dergleichen
Frein mono-disque encapsulé non-lubrifié, en particulier pour axes de véhicules industriels, agricoles et similaires

(30) Priority: 20.05.1994 IT MI940376 U
(43) Date of publication of application: 29.11.1995
(73) Proprietor: CLARK-HURTH COMPONENTS S.p.A., I-38062 Arco (Trento) (IT)
(72) Inventor: Angeretti, Nemo, I-38066 Riva del Garda(Trento) (IT)
(74) Representative: Modiano, Guido, Dr.-Ing.

(56) References cited:
- DE-A- 2 928 091
- FR-A- 2 262 244
- GB-A- 958 992
- GB-A- 1 059 706
- US-A- 2 105 867
- US-A- 2 535 763

## Description

The present invention relates to a non-lubricated single-disk brake for axles of industrial vehicles, particularly of farming machines, earth-moving machines, and the like.

GB-A-1 059 706 discloses a single-disk brake assembly of the type improved upon by the present invention. US-A-2 535 763 and US-A-2 105 867 also disclose single-disk brake systems. As further background art, DE-A-2 928 091 discloses a hydraulic brake in which a brake piston in the main cylinder is provided with two gaskets to prevent loss of brake fluid from the end of the cylinder. A bleeding hole located between the gaskets leads to a transparent collection vessel which is used to check for loss of brake fluid through the inner gasket. GB-A-958 992 discloses a multiple disk brake for heavy duty service having a fluid actuated disk which engages the multiple disk pack.

As is known, the braking devices conventionally used in farming and industrial vehicles in general are usually of the type provided with a drum and associated shoes, with a single non-lubricated disk, and with multiple disks in an oil bath, and generally actuated by fluid actuation systems. It is also known that each one of these braking devices has advantages and disadvantages according to the type of motor vehicle and most of all depending on its use.

In the past the drum brake has in fact been used extensively on farming machines and/or earth-moving machines because of its high static braking capability, its easy installation and maintenance, and because of the absence of elastic elements between the drum and the wheel of the vehicle.

However, in practice they had some severe drawbacks, including the possible penetration of water, mud and oil between the braking surfaces, as well as a poor capability for dynamic braking at higher speeds.

The single-disk non-lubricated brake has also been used on farming machines and the like due to the fact that it has a high capability for dynamic braking, allows easy replacement of the locking pads, and has no elastic elements (gears or the like) between the disk and the wheel of the vehicle.

However, the drawback of this type of brake mostly resides in that it has a poor static braking capability.

Multiple-disk oil-bath brakes are instead widely used in farming machines and in earth-moving machines since they require no maintenance and have good static and dynamic braking capabilities; however, since in these cases an epicyclic speed reduction unit is interposed between the brake and the wheel, this in practice produces a certain degree of elasticity, substantially alternating and frequent vibrations and/or shaking, and in the case of vehicles that operate while their wheels are locked, such as excavators and other vehicles used in the forestry field, this elasticity is scarcely appreciated by the operators.

Accordingly, the aim of the present invention is mainly to eliminate the problem of the elasticity of disk brakes and simultaneously to maintain good capabilities for both static and dynamic braking in addition to preventing mud, water and oil from penetrating between the braking surfaces.

Another object of the invention is to provide a single-disk non-lubricated brake that is structured so that it can be used on machines with both rigid and steering axles, without requiring particular and/or onerous adaptations and/or modifications of existing axles.

Another object is to provide a single-disk non-lubricated brake which is conceived so that it has substantially the same bulk as known single-disk non-lubricated brakes and, as a whole, all the structural and functional advantages of the current drum brake.

This aim, these objects and others which will become apparent from the following description are achieved by a single-disk non-lubricated brake system comprising a braking disk which is associated with a wheel hub that is coaxially rotatable about an axle shaft, said braking disk being enclosed by a casing which is anchored to an axle, said brake system further having friction blocks and a pusher element for actuating said braking disk by means of an annular piston slideable in a seat formed in said axle, characterized in that said braking disk is rigidly keyed on said hub, at least one annular gasket is interposed between the annular surface of the casing and the cylindrical surface of the hub, on which said casing slides, so as to prevent water and/or mud from penetrating between the braking surfaces, one pair of annular gaskets is on the external surface of said annular piston and one pair of annular gaskets is on the internal surface of said annular piston, said pairs of gaskets being suitable for preventing pressured oil from reaching the braking surfaces by seepage, at least one outward venting duct being provided between the two gaskets arranged externally with respect to said piston, said duct being suitable to prevent any oil that may have seeped through the first gasket from reaching the braking surfaces.

More particularly, downstream of said annular piston, and precisely on the facing surfaces of said pusher disk and of said axle, there are shaped elements which form a labyrinth path suitable to prevent any oil that has seeped in any way through said pairs of gaskets from reaching the braking surfaces.

Furthermore, a downward discharge duct is provided on the lowest part of the axle, can be closed by means of a screw-on plug, a grub screw or the like, and allows one to check for any oil leaks both through the brake piston and through the sealing ring of the wheel hub.

Further characteristics and advantages of the present invention will become apparent from the following detailed description, made with reference to the accompanying drawings, which are given merely by way of non-limitative example and wherein:
figure 1 is an axial sectional view of a complete axle of an industrial or farming vehicle, provided with an epicyclic reduction unit, which includes a non-lubricated and sealed single-disk brake executed according to the present invention, and
figure 2 is also a sectional view illustrating a detail of said brake and more precisely of a device for sealing against the seepage of oil through the annular piston that actuates the braking disk.

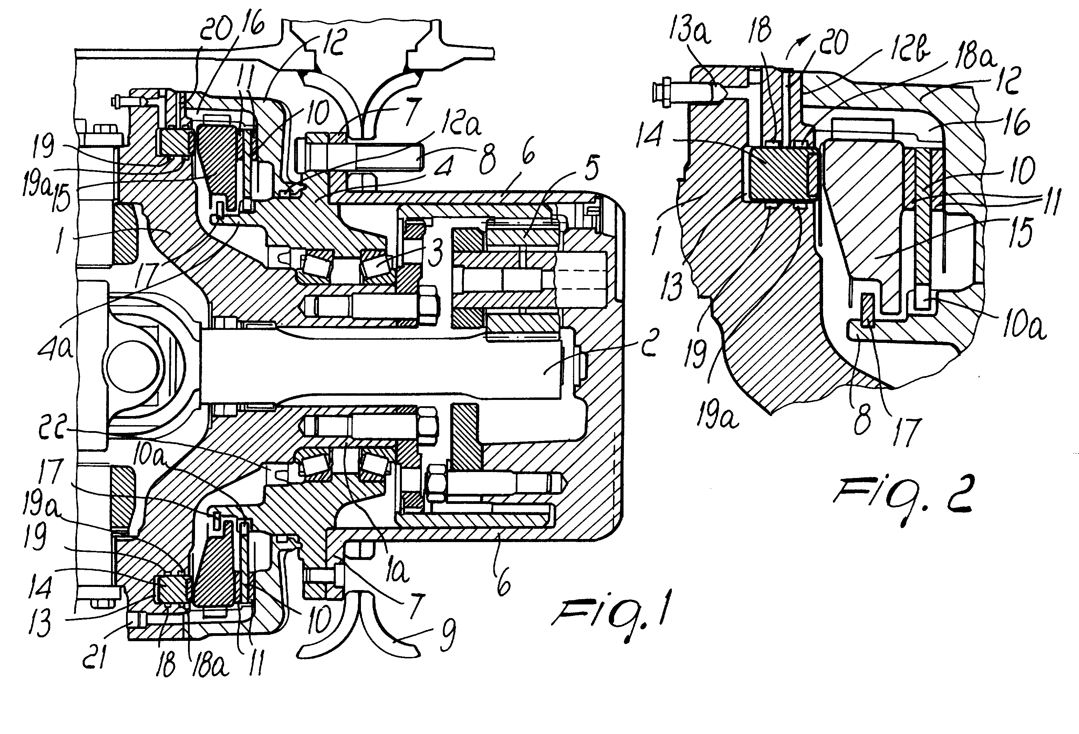

With particular reference to figure 1, the axle illustrated therein is substantially of a known type preset for vehicles that use a braking system of the single-disk non-lubricated type for each wheel.

The conventional dome-shaped axle 1 in fact encloses the axle shaft 2 and has, at its tapered end 1a, a plurality of thrust bearings 3 which allow a hub 4, which is coaxial to the axle shaft 2, to rotate freely on the end 1a of the axle without any axial movements.

The hub 4 is rotated by the axle shaft 2 by means of an epicyclic reduction unit also of a known type, generally designated by the reference numeral 5, which is enclosed within a box-like body 6 rotatable together with the reduction unit; said body 6 is furthermore rigidly connected to the hub 4 by means of an annular flange 7 and pins 8 which also act as anchoring means for the disk 9 of a tire-fitted wheel (not shown).

It should be furthermore specified that figure 1 illustrates a steering axle for excavators and the like, but it is obvious that the axle may also be fixed.

Accordingly, the rotation of the axle shaft 2 causes the rotation of the hub 4 by means of the reduction unit 5 and the box-like body 6.

A single-disk non-lubricated brake is associated with an axle of the above described type illustrated by way of example in figure 1; said brake is conceived and executed so as to eliminate the problem of elasticity and ensure tightness to infiltrations of water or mud and to oil seepage.

Said single-disk brake according to the invention comprises a large braking disk 10 provided with friction blocks 11 which is keyed, by means of an internal set of teeth 10a, to the inner end 4a of the rotating hub 4; this avoids any elasticity between the braking disk and the wheel which is rigidly coupled to the hub; said braking disk 10 is enclosed within a casing 12 which is shaped like an annular body and has a substantially L-shaped transverse cross-section; said casing is mounted coaxially with respect to the rotating hub 4 with the interposition of a sealing gasket 12a which, by sliding directly in the hub, prevents water and/or mud from penetrating inside the casing and thus from reaching the braking surfaces. Furthermore, the casing is rigidly anchored at 12b to the fixed axle 1 (figure 2) and on the upper side of said axle there is a cylindrical annular chamber 13 which accommodates an annular piston 14. A disk-like element 15 is interposed between said piston 14 and the braking disk 10 and has the purpose of pushing the braking disk against the inner surface of the casing. Pressurized oil is sent into the annular chamber 13 through a duct 13a so as to push the piston against the disk-like pusher body and push said body against the braking disk. Said pusher body 15 is mounted so as to be movable within an upper guide 16 formed in the casing and has, in a downward region, a centrifugal seal 17 against the end 4a of the rotating hub 4.

The centrifugal seal 17 also has the purpose of moving the pusher body 15 and the braking disk 10 during disassembly. This prevents any oil not discharged during draining from escaping from the sealing ring 22 and making contact with the braking disk 10.

Furthermore, again according to the invention, the actuation piston 14 is provided on its outer surface with two gaskets, designated by the reference numerals 18-18a (figure 2), and with similar gaskets 19-19a on its inner surface, in order to increase safety against any seepage of oil that would reach the braking surfaces. Furthermore, a venting and drainage duct 20 is interposed in the upper part of the brake, between the outer gaskets 18 and 18a, to allow inspection and discharge any oil that may have seeped through the first gasket 18, whereas in the lower part of the brake there is a discharge duct 21 (figure 1) which is closed by a grub screw or the like to check for any leaks.

Finally, labyrinth paths or the like are formed on the outer surface of the axle and on the facing surface of the pusher disk 15; said paths are suitable to prevent any oil that has seeped through the two pairs of gaskets of the piston from reaching and wetting the braking surfaces.

Naturally, the above described single-disk brake can be applied both to rigid axles and to steering axles without requiring any particular and onerous modifications to the structures of said axles.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Single-disk non-lubricated brake system comprising a braking disk (10) which is associated with a wheel hub (4) that is coaxially rotatable about an axle shaft (2), said braking disk (10) being enclosed by a casing (12) which is anchored to an axle (1), said brake system further having friction blocks (11) and a pusher element (15) for actuating said braking disk (10) by means of an annular piston (14) slideable in a seat (13) formed in said axle (1), characterized in that said braking disk (10) is rigidly keyed on said hub (4), at least one annular gasket (12a) is interposed between the annular surface of the casing (12) and the cylindrical surface of the hub (4), on which said casing (12) slides, so as to prevent water and/or mud from penetrating between the braking surfaces, one pair of annular gaskets (18-18a) is on the external surface of said annular piston (14) and one pair of annular gaskets (19-19a) is on the internal surface of said annular piston (14), said pairs of gaskets being suitable for preventing pressured oil from reaching the braking surfaces by seepage, at least one outward venting duct (20) being provided between the two gaskets (18-18a) arranged externally with respect to said piston (14), said duct (20) being suitable to prevent any oil that may have seeped through the first gasket (18) from reaching the braking surfaces.

2. Single-disk non-lubricated brake system according to Claim 1, characterized in that downstream of said annular piston (14), on the mutually facing surfaces of said pusher element (15) and of said axle (1), there are shaped elements that form a labyrinth path suitable to prevent any oil that may have seeped through said pairs of gaskets (18-18a,19-19a) of the piston (14) from reaching and wetting the braking surfaces.

3. Single-disk non-lubricated brake system according to Claim 1, characterized in that said braking disk (10) is rigidly keyed by means of an internal set of teeth (10a) to said hub (4).

4. Single-disk non-lubricated brake system according to Claim 1, characterized in that a discharge duct (21) is formed on the lower part of said axle (1), can be closed by means of a grub screw or screw-on plug or the like, and allows one to check for any oil leaks through the braking piston (14) and the sealing ring (22) of the wheel hub (4).

5. Single-disk non-lubricated brake system according to any one of Claims 1-4, characterized in that said axle (1) can be either a rigid or steering axle.

## Patentansprüche

1. Trockenlaufendes Einscheibenbremsensystem mit einer Bremsscheibe (10), die mit einer Radnabe (4) verbunden ist, die koaxial um eine Achsenwelle (2) drehbar ist, wobei die Bremsscheibe (10) in ein Gehäuse (12) eingeschlossen ist, das an einer Achse (1) verankert ist, wobei das Bremsensystem außerdem Reibblöcke (11) und ein Drückelement (15) zur Betätigung der Bremsscheibe (10) mittels eines ringförmigen Kolbens (14) aufweist, der innerhalb eines in der Achse (1) ausgebildeten Sitzes (13) verschiebbar ist,
dadurch gekennzeichnet,
daß die Bremsscheibe (10) fest auf der Nabe (4) befestigt ist, daß wenigstens eine ringförmige Dichtung (12a) zwischen der ringförmigen Oberfläche des Gehäuses (12) und der zylindrischen Oberfläche der Nabe (4) angeordnet ist, auf welcher das Gehäuse (12) gleitet, um ein Eindringen von Wasser und/oder Schmutz zwischen die Bremsflächen zu verhindern, daß ein Paar von ringförmigen Dichtungen (18-18a) auf der äußeren Oberfläche des ringförmigen Kolbens (14) angeordnet ist und daß ein Paar von ringförmigen Dichtungen (19-19a) auf der inneren Oberfläche des ringförmigen Kolbens (14) angeordnet ist, wobei die Paare von Dichtungen geeignet sind, zu verhindern, daß unter Druck stehendes Öl die Bremsoberflächen durch Sickerung erreicht, wobei wenigstens ein auswärts gerichteter Kanal (20) zwischen den beiden Dichtungen (18-18a) vorgesehen ist, der mit Bezug auf den Kolben (14) außerhalb angeordnet ist, wobei der Kanal (20) geeignet ist, zu verhindern, daß irgendein Öl, das durch die erste Dichtung (18) hindurchgesickert sein kann, die Bremsoberflächen erreicht.

2. Trockenlaufendes Einscheibenbremsensystem nach Anspruch 1,
dadurch gekennzeichnet,
daß stromabwärts des ringförmigen Kolbens (14) auf den jeweils gegenüberliegenden Oberflächen des Drückelementes (15) und der Achse (1) geformte Elemente vorgesehen sind, die einen Labyrinthweg bilden, welcher geeignet ist, um zu verhindern, daß irgendein Öl, welches durch die Paare von Dichtungen (18-18a,19-19a) des Kolbens (14) hindurchgesickert sein kann, die Bremsoberflächen erreicht und benetzt.

3. Trockenlaufendes Einscheibenbremssensystem nach Anspruch 1,
dadurch gekennzeichnet,
daß die Bremsscheibe (10) fest mittels eines inneren Satzes von Zähnen (10a) auf der Nabe (4) befestigt ist.

4. Trockenlaufendes Einscheibenbremsensystem nach Anspruch 1,
dadurch gekennzeichnet,
daß ein Austrittskanal (21) am unteren Teil der Achse (1) ausgebildet ist, welcher mittels einer Madenschraube, eines Gewindestopfens oder dergleichen verschlossen werden kann und es erlaubt, zu überprüfen, ob irgendein Öl durch den Bremskolben (14) und den Dichtring (22) der Radnabe hindurchtritt.

5. Trockenlaufendes Einscheibenbremsensystem nach irgendeinem der Ansprüche 1 bis 4,
dadurch gekennzeichnet,
daß die Achse (1) entweder eine feststehende oder drehende Achse ist.

## Revendications

1. Système de frein non-lubrifié à disque unique comportant un disque de freinage (10) qui est associé à un moyeu de roue (4) qui peut tourner coaxialement autour d'un arbre d'essieu (2), ledit disque de freinage (10) étant enfermé dans un boîtier (12) qui est ancré sur un essieu (1), ledit système de frein ayant de plus des blocs de friction (11) et un élément de poussée (15) pour actionner ledit disque de freinage (10) par l'intermédiaire d'un piston annulaire (14) pouvant coulisser dans un siège (13) formé dans ledit essieu (1), caractérisé en ce que ledit disque de freinage (10) est calé de manière rigide sur ledit moyeu (4), au moins un joint annulaire (12a) étant interposé entre la surface annulaire du boîtier (12) et la surface cylindrique du moyeu (4), sur laquelle ledit boîtier (12) coulisse, de manière à empêcher que de l'eau et/de la boue ne pénètre entre les surfaces de freinage, une paire des joints annulaires (18-18a) est située sur la surface extérieure dudit piston annulaire (14) et une paire de joints annulaires (19-19a) est située sur la surface intérieure dudit piston annulaire (14), lesdites paires de joints étant adaptées pour empêcher que de l'huile sous pression n'atteigne les surfaces de freinage par infiltration, au moins un conduit de ventilation vers l'extérieur (20) étant agencé entre les deux joints (18-18a) agencés extérieurement par rapport audit piston (14), ledit conduit (20) étant adapté pour empêcher toute huile qui aurait pu s'être infiltrée à travers le premier joint (18) d'atteindre les surfaces de freinage.

2. Système de frein non-lubrifié à disque unique selon la revendication 1, caractérisé en ce qu'en aval dudit piston annulaire (14), sur les surfaces mutuellement en vis-à-vis dudit élément de poussée (15) et dudit essieu (1) sont formés des éléments qui forment un trajet en labyrinthe adapté pour empêcher toute huile qui aurait pu s'être infiltrée à travers lesdites paires de joints (18-18a, 19-19a) du piston (14) d'atteindre et d'humecter les surfaces de freinage.

3. Système de frein non-lubrifié à disque unique selon la revendication 1, caractérisé en ce que ledit disque de freinage (10) est calé de manière rigide par l'intermédiaire d'un ensemble intérieur de dents (10a) sur ledit moyeu (4).

4. Système de frein non-lubrifié à disque unique selon la revendication 1, caractérisé en ce qu'un conduit de décharge (21) est formé sur la partie inférieure dudit essieu (1), pouvant être fermé par l'intermédiaire d'une vis sans tête ou d'un bouchon à vis ou analogue, et permet de surveiller toute fuite d'huile à travers le piston de freinage (14) et la bague d'étanchéité (22) du moyeu de roue (4).

5. Système de frein non-lubrifié à disque unique selon l'une quelconque des revendications 1 à 4, caractérisé en ce que ledit essieu (1) peut être soit un essieu rigide soit un essieu directeur.
